# FASCICULE DE BREVET EUROPEEN

(11) **EP 0 444 565 B1**
(45) Date de publication et mention de la délivrance du brevet: **18.01.1995**
(21) Numéro de dépôt: 91102718.3
(22) Date de dépôt: 25.02.1991
(51) Int. Cl.: H02B 1/052

(54) **Dispositif de fixation d'un bloc de jonction sur un profilé support symétrique**
Vorrichtung zum Befestigen eines Verbindungsblocks auf einem symmetrischen Profilträger
Device for fixing a junction block on a symmetrical profile support

(30) Priorité: 02.03.1990 FR 9002651
(43) Date de publication de la demande: 04.09.1991
(73) Titulaire: ENTRELEC SA, F-69100 Villeurbanne (FR)
(72) Inventeur: Heng, Jean-Paul, F-69005 Lyon (FR); Bidal, Jean-Claude, F-01600 Reyrieux (FR); Predignac, Michel, F-69007 Lyon (FR)
(74) Mandataire: Weinmiller, Jürgen

(56) Documents cités:
- EP-A- 0 233 458
- DE-A- 1 490 769
- DE-A- 3 526 494

## Description

L'invention concerne la fixation d'un bloc de jonction sur un profilé symétrique.

Les dispositifs utilisés font généralement partie du bloc de jonction et sont situés à une extrémité ou base du boîtier du bloc de jonction. Les dispositifs de fixation comportent des crochets pour permettre la pose ou la dépose de l'appareil sur le profilé support.

On connaît, par le brevet français 2502449 intitulé "Dispositif de fixation d'un appareil sur profilés supports", de la demanderesse, un dispositif qui est constitué par une patte d'accrochage solidaire du boîtier de l'appareil, et par une pièce d'accrochage et un ressort à compression. La pièce d'accrochage comporte une tige et un corps qui coulissent dans un guide longitudinal de la base du boîtier. Le ressort à compression est monté partiellement comprimé dans un logement ménagé dans la base et est traversé par la tige de la pièce d'accrochage, tige qui forme des épaulements avec le corps. L'extrémité de la tige est munie d'une goupille qui comprime le ressort lorsque l'appareil est monté sur un profilé.

La pièce d'accrochage comporte deux crochets pour fixation sur les profilés, et un guide qui coopère avec une rainure de la base pour rendre la pièce d'accrochage imperdable. Une telle pièce d'accrochage, du fait qu'elle est mobile dans la base du boîtier ne peut être utilisée comme connexion de masse, pour relier le profilé support à la masse.

Le document DE-A-3 526 494 décrit un dispositif comportant : un ressort, et une pièce métallique ayant à la fois la fonction d'accrochage et la fonction de connexion de masse. La pièce comprend un corps oblong dont la section transversale a une forme en U, et dont les deux extrémités ont chacune la forme d'un double crochet destiné à être accroché sur l'aile d'un profilé. Le ressort a la forme d'une lame comportant plusieurs courbures, dont l'une appuie sur une aile du profilé pour maintenir cette aile au fond du double crochet qui est accroché sur cette aile. Le ressort comporte, au voisinage de son centre, deux saillies latérales, qui sont retenues respectivement dans deux fenêtres percées dans les deux faces opposées du U, au voisinage du centre du corps. Ces deux saillies rendent le ressort imperdable, mais elles ont l'inconvénient de nécessiter deux fenêtres d'accrochage, c'est-à-dire une pièce d'accrochage ayant deux faces opposées.

Une telle pièce peut être fabriquée assez facilement en pliant une tôle pour lui donner une forme en U, mais une telle pièce présente l'inconvénient d'un encombrement non négligeable, puisque l'épaisseur minimale du bloc de jonction est alors égale à largeur du ressort, plus deux fois l'épaisseur de cette tôle, plus le jeu nécessaire au fonctionnement du ressort.

L'invention a pour but de réaliser un dispositif de fixation d'un bloc de jonction qui serve également de connexion de masse tout en présentant un encombrement réduit.

L'invention a pour objet un dispositif de fixation d'un bloc de jonction sur un profilé symétrique, ce dispositif étant inséré dans la base d'un boîtier isolant du bloc de jonction; et comportant un ressort et une pièce métallique d'accrochage sur le profilé et de connexion de masse; la pièce d'accrochage et de connexion comportant :
- un corps;
- un premier et un deuxième crochet situés respectivement à deux extrémités du corps de la pièce, et destinés à être accrochés respectivement à deux ailes du profilé ;

caractérisé en ce que le corps de ladite pièce d'accrochage sur le profilé et de connexion de masse a une forme plane;
et en ce que le ressort est une lame courbe comportant une fente longitudinale, dans laquelle est inséré le corps de ladite pièce pour que le ressort soit à cheval sur ladite pièce.

Le dispositif de fixation ainsi caractérisé a un encombrement réduit, du fait que son épaisseur peut, à la limite, être égale à la largeur de la lame du ressort; et l'épaisseur de la pièce d'accrochage étant elle-même réduite à l'épaisseur d'une seule pièce de tôle plane.

L'invention sera bien comprise par la description qui va suivre d'un exemple de réalisation illustré par les figures annexées dans lesquelles :
- la figure 1 représente un dispositif de l'invention monté sur un profilé symétrique,
- la figure 2 représente une pièce d'accrochage du dispositif selon la figure 1,
- la figure 3 est une vue en perspective d'un ressort du dispositif de la figure 1.

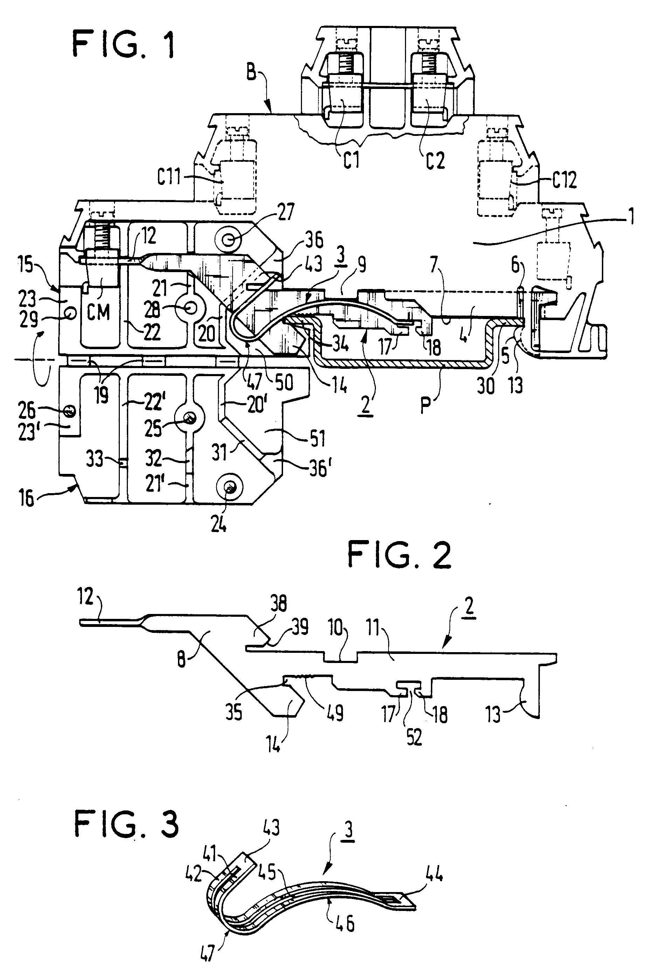

La figure 1 représente un dispositif de fixation de l'invention monté sur un profilé symétrique P. Le dispositif de fixation est constitué par une base 1 d'un boîtier B d'un appareil à fixer, une pièce d'accrochage 2, et une lame de ressort 3. Le bottier B comporte à sa partie supérieure des bornes C1, C2 pour des raccordements électriques, et dans sa partie médiane deux autres bornes C11,C12 ; le nombre des bornes sur le boîtier est indépendant de l'invention.

La base 1 du boîtier comporte près d'un bord une patte 5 qui forme un coin avec une face inférieure 7 de la base, ledit coin étant tourné vers un bord opposé de la base, et recevant une aile 30 du profilé symétrique P. Une fente 6 pratiquée dans la base perpendiculairement à la face inférieure 7 de celle-ci et en extrémité dudit coin formé par la patte et la face inférieure 7, permet une certaine élasticité de la patte 5 par rapport à la base, pour faciliter le montage du profilé. A l'opposé de la patte 5, la base est constituée par une partie fixe 15 et une partie mobile 16 réunie par des charnières 19 à la partie fixe, les charnières étant en même matériau plastique que le boîtier B et venant du moulage du boîtier, de même que la partie mobile 16. Les parties fixe et mobile sont identiques et comportent des nervures 20, 21, 22, 23 pour la partie fixe et 20′, 21′, 22′, 23′ pour la partie mobile. Des pions 24, 25, 26 de la partie mobile coopèrent avec des trous 27, 28, 29 de la partie fixe pour la fixation de la partie mobile sur la partie fixe. Les nervures présentent des creux 31, 32, 33, visibles dans la partie mobile, pour le logement et la fixation de la pièce d'accrochage 2.

La pièce d'accrochage 2 comporte un corps 11 et une tige 12. Le corps 11 comporte, à sa partie inférieure un premier crochet 13 situé à une extrémité du corps opposée à la tige, un deuxième crochet 14 situé à une autre extrémité du corps : entre les premier et deuxième crochets le corps comporte un troisième crochet 17 du côté du deuxième crochet 14 et une butée 18 du côté du premier crochet 13. La partie supérieure de la pièce d'accrochage comporte une encoche 10 qui coopère avec une dent 9 de la base pour empêcher tout mouvement longitudinal de la pièce d'accrochage dans la base 1, dont la partie inférieure 4 comporte une fente longitudinale pratiquée dans l'épaisseur de la base pour loger le crochet 13 et la partie du corps 11 comprise entre la butée 18 et ledit crochet 13. La tige 12 est parallèle au corps 11 et décalée par rapport à celui-ci du côté de sa partie supérieure, elle prolonge en quelque sorte le corps 11. La tige et le corps se raccordent donc par une zone de raccordement 8 qui comporte une dent 38 dont l'extrémité 39, tournée vers la partie supérieure du corps et inclinée par rapport à celle-ci, sert d'appui à la lame de ressort 3. Cette lame ressort, représentée en perspective figure 3 est constituée par deux lamelles 41, 42 réunies par deux ponts 43, 44, un à chaque extrémité de la lame de ressort ; les lamelles sont séparées par une fente 45. La lame de ressort comporte une partie cintrée 46 terminée par le pont 44 et une partie recourbée 47, dirigée vers le côté convexe de la partie cintrée, et comportant le pont 43. Le montage de la lame de ressort sur la pièce d'accrochage s'effectue de la manière suivante : la lame de ressort étant pratiquement perpendiculaire au corps 11, le premier crochet 13 est engagé dans la fente 45, le pont 44 est engagé entre le troisième crochet 17 et la butée 18 et la lame de ressort est rabattue vers le corps 11 du côté de la tige 12 ; le corps s'engage dans la fente 45, jusqu'à ce que le pont 43 de la partie recourbée 47 vienne au contact de la partie supérieure du corps. Dans cette position le pont 44 est parallèle à la partie inférieure du corps et est prisonnier dans l'espace compris entre le troisième crochet 17, la butée 18 et ladite partie inférieure ; en effet le pont a une largeur supérieure à l'espace 52 entre le troisième crochet 17 et la butée 18.

La pièce d'accrochage ainsi équipée de la lame de ressort est introduite, par son premier crochet 13 dans la fente longitudinale de la partie inférieure 4 de la base 1. L'encoche 10 du corps coopère avec la dent 9 de la base ; la zone de raccordement 8 vient dans les creux 31 et 32 et la tige 12 vient dans le creux 33. La partie recourbée 47 de la lame de ressort est dans un logement délimité par les nervures 20 et 20′, la paroi 50 de la partie fixe 15 et la paroi 51 de la partie mobile 16.

Lorsque le boîtier B ainsi équipé de la pièce d'accrochage 2 est monté sur le profilé symétrique P, la partie recourbée 47 de la lame de ressort est comprimée par l'aile 34 du profilé qui s'engage dans une encoche 35 de la pièce d'accrochage, ladite encoche étant située entre le deuxième crochet 14 et la partie inférieure du corps 11. Le pont 43 vient alors en butée contre l'extrémité 39 de la dent 38 et contre l'extrémité 36 de la nervure 20 et l'extrémité 36′ de la nervure 20′.

La tige 12 est fixée à une borne de masse CM, qui permet le raccordement du profilé P à la masse par l'intermédiaire de la pièce d'accrochage 2, qui dans la présente invention est fixe dans la base du boîtier.

Le contact entre la pièce d'accrochage 2 et le profilé qui se fait par les ailes 30 et 34 de celui-ci et les crochets 13 et 14, est amélioré par des dents de contact 49 situées à la partie inférieure de la pièce d'accrochage 2, à proximité de l'encoche 35, lesdites dents de contact 49 venant contre l'aile 34 du profilé P.

## Revendications

1. Dispositif de fixation d'un bloc de jonction sur un profilé symétrique, ce dispositif étant inséré dans la base (1) d'un boîtier isolant du bloc de jonction; et comportant un ressort (3) et une pièce métallique (2) d'accrochage sur le profilé, et de connexion de masse; la pièce d'accrochage et de connexion comportant :
- un corps (11)
- un premier et un deuxième crochet (13, 14) situés respectivement à deux extrémités du corps (11) de la pièce, et destinés à être accrochés respectivement à deux ailes (30, 34) du profilé (P);
caractérisé en ce que le corps (11) de ladite pièce d'accrochage sur le profilé et de connexion de masse a une forme plane;
et en ce que le ressort (3) est une lame courbe comportant une fente longitudinale (45), dans laquelle est inséré le corps (11) de ladite pièce pour que le ressort soit à cheval sur ladite pièce.

2. Dispositif selon la revendication 1, caractérisé en ce que le ressort (3) a la forme de deux lamelles parallèles (41, 42) séparées par ladite fente (45) et reliées par deux ponts (43, 44) situés respectivement aux deux extrémités du ressort.

3. Dispositif selon la revendication 1, caractérisé en ce que le ressort a une forme en S;
en ce que le corps (11 ) de la pièce d'accrochage et de connexion de masse comporte une première découpe (17, 18, 52) pour immobiliser une première extrémité (43) du ressort lorsqu'il est bandé; et comporte une deuxième découpe (39) pour immobiliser une seconde extrémité (44) du ressort lorsqu'il est bandé;
et en ce que une première partie courbe (47) de la forme en S du ressort (3) est destinée à appuyer sur une aile (34) du profilé (P); alors qu'une seconde partie courbe (46) de la forme en S du ressort (3) est destiné à appuyer sur la base (9, 1) du boîtier isolant.

## Patentansprüche

1. Befestigungsvorrichtung für einen Anschlußblock auf einem symmetrischen Profilträger, wobei diese Vorrichtung in die Basis (1) eines isolierenden Gehäuses des Anschlußblocks eingesteckt ist und eine Feder (3) und ein metallisches Einhakteil (2) zum Einhaken auf dem Profilträger und als Erdanschluß aufweist, wobei das Einhakteil aufweist:
- einen Körper (11),
- einen ersten und einen zweiten Haken (13, 14), die je an einem der Enden des Körpers (11) des Teils angeordnet sind und je an einem von zwei Flügeln (30, 34) des Profilträgers (P) eingehakt werden sollen,
dadurch gekennzeichnet, daß der Körper (11) des Teils zum Einhaken auf dem Profilträger und für den Erdanschluß eine ebene Form hat,
und daß die Feder (3) eine gekrümmte Lamelle mit einem Längsschlitz (45) ist, in den der Körper (11) des Einhakteils eingeführt ist, damit die Feder auf dem Einhakteil aufsitzt.

2. Vorrichtung nach Anspruch 1, dadurch gekennzeichnet, daß die Feder (3) die Form zweier paralleler Lamellen (41, 42) hat, die durch den Schlitz (45) getrennt und durch zwei Brükken (43, 44) verbunden sind, die sich je an einem Ende der Feder befinden.

3. Vorrichtung nach Anspruch 1, dadurch gekennzeichnet, daß die Feder S-Form hat, daß der Körper (11) des Einhak- und Erdanschlußteils einen ersten Ausschnitt (17, 18, 52), um ein erstes Ende (43) der Feder festzusetzen, wenn sie gespannt ist, und einen zweiten Ausschnitt (39) aufweist, um ein zweites Ende (44) der Feder festzusetzen, wenn sie gespannt ist, und daß ein erster gekrümmter Bereich (47) der S-förmigen Feder (3) auf einen Flügel (34) des Profilträgers (P) drücken soll, während ein zweiter gekrümmter Bereich (46) der S-förmigen Feder (3) auf die Basis (9, 1) des Isoliergehäuses drücken soll.

## Claims

1. A fixing device for fixing a terminal block on a symmetrical rail, the device being inserted in the base (1) of an insulating case of the terminal block; and including a spring (3) and a metal fastening piece (2) on the rail and a metal earthing connection piece; the fastening and connection piece including:
a body (11); and
a first and second hook (13, 14) situated respectively to two ends of the body (11) of the piece, and designed to be fastened respectively to two rims (30, 34) of the rail (P);
the fixing device being characterized in that the body (11) of said fastening piece on the rail and earthing connection piece is flat in shape;
and in that the spring (3) is a curved blade including a longitudinal slot (45), into which the body (11) of said piece is inserted so that the spring is located astride on said piece.

2. A device according to claim 1, characterized in that the spring (3) is in the form of two parallel sub-blades (41, 42) separated by said slot (45) and interconnected by two bridges (43, 44) situated at respective ends of the spring.

3. A device according to claim 1, characterized in that the spring is S-shaped;
in that the body (11) of the fastening and earthing connection piece includes a first cutout (17, 18, 52) to secure a first end (43) of the spring when it is loaded; and includes a second cutout (39) to secure a second end (44) of the spring when it is loaded;
and in that a first S-shaped curved portion (47) of the spring (3) presses on a rim (34) of the rail (P); such that a second S-shaped curved portion (46) of the spring (3) presses on the base (9, 1) of the insulating case.
